# EUROPEAN PATENT SPECIFICATION

(11) **EP 4 501 046 B1**
(45) Date of publication and mention of the grant of the patent: **07.10.2026**
(21) Application number: 22941043.6
(22) Date of filing: 09.05.2022
(51) Int. Cl.: H04W 76/11, H04W 12/04, H04W 36/00, H04W 12/02, H04W 12/75, H04W 8/26, H04W 16/02, H04W 36/06, H04W 74/0833

(54) **CELLULAR DEVICE RADIO NETWORK TEMPORARY IDENTITY PROTECTION**
TEMPORÄRER IDENTITÄTSSCHUTZ FÜR EIN MOBILFUNKNETZ EINER ZELLULAREN VORRICHTUNG
PROTECTION D'IDENTITÉ TEMPORAIRE DE RÉSEAU RADIO DE DISPOSITIF CELLULAIRE

(43) Date of publication of application: 05.02.2025
(73) Proprietor: Apple Inc., Cupertino, CA 95014 (US)
(72) Inventor: MOSTAFA, Amr Abdelrahman Yousef Abdelrahman, 80335 Munich (DE); XU, Fangli, Beijing 100022 (CN); GUO, Shu, Beijing 100022 (CN)
(74) Representative: COPA Copenhagen Patents
(86) International application number: PCT/CN2022/091789
(87) International publication number: WO 2023/216075

(56) References cited:
- WO-A1-2013/113674
- WO-A1-2013/113674
- WO-A1-2016/188454
- WO-A1-2021/036292
- WO-A1-2021/064472
- WO-A1-2021/064472
- WO-A2-2014/020498
- CN-A- 103 582 132
- US-A1- 2019 223 018
- US-A1- 2019 223 018
- US-A1- 2021 144 581
- US-A1- 2021 144 581
- QUALCOMM INC.: "Addition of PUR RNTI in E-UTRA related UE identities", 3GPP DRAFT; R2-2006980, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Online; 20200817 - 20200828, 7 August 2020 (2020-08-07), Mobile Competence Centre ; 650, route des Lucioles ; F-06921 Sophia-Antipolis Cedex ; France , XP051911828

## Description

### TECHNICAL FIELD

The present disclosure relates to wireless communication, and in particular, to cellular device radio network temporary identity protection.

### BACKGROUND

In cellular networks (e.g., Long Term Evolution (LTE) New Radio (NR), etc.) a user equipment (UE) is assigned a Cell-Radio Network Temporary Identifier (C-RNTI) during a radio resource control (RRC) connection establishment procedure. The C-RNTI is used for communications between the network and the UE. For example, if the network would like to address downlink (DL) data to the UE, the network may send a DL grant using Downlink Control Information (DCI) messages on the Physical Downlink Control Channel (PDCCH). The DCI messages include C-RNTI value assigned to the UE. Based on the C-RNTI, the UE understands that the DL grant in the DCI is for the UE and allows the UE to receive the DL data based on the information received in the DL grant.

However, the assignment of the C-RNTI during the RRC connection establishment is not secure and can be identified by attackers. There have been instances where attackers have used the C-RNTI and other information to obtain the Temporary Mobile Subscriber Identity (TMSI) that is also assigned to the UE during a Random Access procedure. This would enable the attackers to track data streams addressed to the TMSI within a network and possibly attack the UE. There are also other attack scenarios that may be used by an attacker upon obtaining the C-RNTI of the UE. Thus, there should be a manner of protecting the C-RNTI from attackers. WO 2021/036292 A1 discloses a terminal device that sends to a network device a network access request that carries temporary privacy identity identification when there is a demand for network access, and performs message interaction and verification. US 2021/144581 A1 discloses a method of operating a base station (BS), including generating an indicator indicating that the BS is capable of supporting a high-capacity radio network temporary identifier (HC-RNTI), wherein a size of the HC-RNTI is based on a configurable granularity; generating a system information block including the indicator and information indicating the size of the HC-RNTI; transmitting, to a user equipment (UE), the system information block; and transmitting, to the UE, the HC-RNTI, wherein the HC-RNTI is allocated to the UE.

### SUMMARY

Some exemplary embodiments are related to a processor of a user equipment (UE) configured to perform operations. The operations include receiving, from a network with which the UE has a connection, a secured message comprising a configuration for a dynamic identifier, wherein the configuration comprises a plurality of identifiers that are each to be used by the UE during a different time period when the UE is connected to the network; and exchanging communications with the network, wherein the communications comprise the dynamic identifier.

Other exemplary embodiments relate to a user equipment having a transceiver configured to communicate with a network and a processor communicatively coupled to the transceiver and configured to perform operations. The operations include receiving, from the network with which the UE has a connection, a secured message comprising a configuration for a dynamic identifier, wherein the configuration comprises a plurality of identifiers that are each to be used by the UE during a different time period when the UE is connected to the network; and exchanging communications with the network, wherein the communications comprise the dynamic identifier.

Still further exemplary embodiments are related to a processor of a base station configured to perform operations. The operations include sending, to a user equipment (UE) with which the base station has a connection, a secured message comprising a configuration for a dynamic identifier, wherein the configuration comprises a plurality of identifiers that are each to be used by the UE during a different time period when the UE is connected to the base station and exchanging communications with the UE, wherein the communications comprise the dynamic identifier.

Additional exemplary embodiments are related to a baser station having a transceiver configured to communicate with a user equipment (UE) and a processor communicatively coupled to the transceiver and configured to perform operations. The operations include sending, to the UE with which the base station has a connection, a secured message comprising a configuration for a dynamic identifier, wherein the configuration comprises a plurality of identifiers that are each to be used by the UE during a different time period when the UE is connected to the base station and exchanging communications with the UE, wherein the communications comprise the dynamic identifier.

### Brief Description of the Drawings

Fig. 1 shows an exemplary network arrangement according to various exemplary embodiments.
Fig. 2 shows an exemplary UE according to various exemplary embodiments.
Fig. 3 shows an exemplary base station according to various exemplary embodiments.
Fig. 4 shows a timing diagram illustrating a C-RNTI of a UE dynamically changing over time according to various exemplary embodiments.
Fig. 5 shows a signaling diagram showing an exemplary signaling to configure the UE with a dynamic C-RNTI according to various exemplary embodiments.
Fig. 6 shows a timing diagram illustrating a dynamic C-RNTI hopping scheme based on a system frame number (SFN) of a network according to various exemplary embodiments.

### Detailed Description

The exemplary embodiments may be further understood with reference to the following description and the related appended drawings, wherein like elements are provided with the same reference numerals. The exemplary embodiments relate to protecting the C-RNTI assigned to the UE by dynamically changing the C-RNTI in the time-domain based on a configuration received from the network via secured signaling.

The exemplary embodiments are described with regard to a UE. However, reference to a UE is merely provided for illustrative purposes. The exemplary embodiments may be utilized with any electronic component that may establish a connection to a network and is configured with the hardware, software, and/or firmware to exchange information and data with the network. Therefore, the UE as described herein is used to represent any electronic component.

The exemplary embodiments are also described with reference to a 5G New Radio (NR) network. However, it should be understood that the exemplary embodiments may also be implemented in other types of networks, including but not limited to LTE networks, future evolutions of the cellular protocol, or any other type of network that assigns, in an unsecured manner, an identifier to a device that is using the network.

In addition, throughout this description, the term dynamic C-RNTI is used to describe a C-RNTI that may be dynamically changed over time. As will be described in more detail below, the UE may be assigned a plurality of dynamic C-RNTIs that are used at different times during the period the UE is connected to the network. The dynamic C-RNTI is contrasted with a normal C-RNTI that is a single C-RNTI value that is the only C-RNTI used during the period the UE is connected to the network.

Furthermore, the exemplary embodiments are described with reference to the C-RNTIs. However, those skilled in the art will understand that the principles described herein may be extended any type of identifier used to identify a device in unicast communications between the device and a network. That is, while the examples describe the C-RNTI as the identifier, any identifier may be made dynamic in a manner similar to the manner described herein for the C-RNTI, for example, a Configured Scheduling RNTI (CS-RNTI), Channel State Information RNTI (CSI-RNTI), etc.

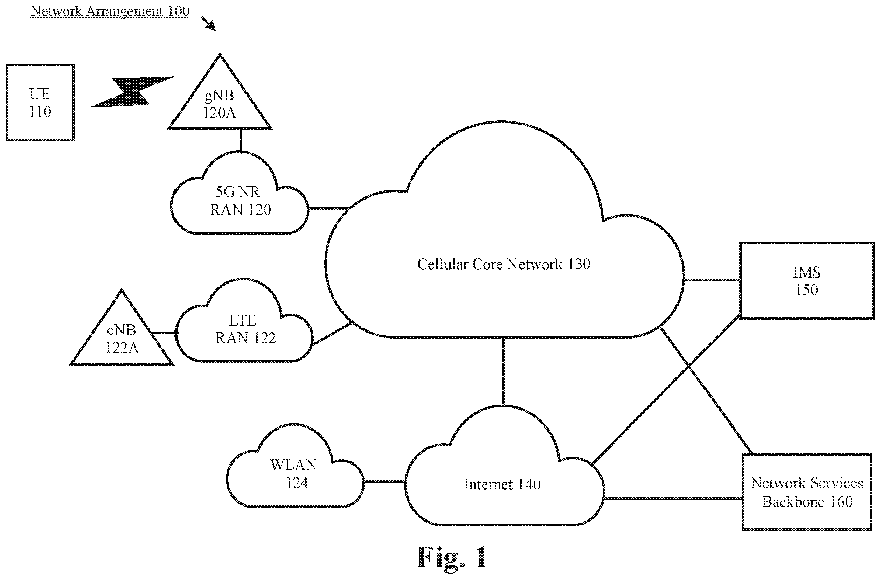

Fig. 1 shows an exemplary network arrangement 100 according to various exemplary embodiments. The exemplary network arrangement 100 includes a UE 110. Those skilled in the art will understand that the UE 110 may be any type of electronic component that is configured to communicate via a network, e.g., mobile phones, tablet computers, desktop computers, smartphones, phablets, embedded devices, wearables, Internet of Things (IoT) devices, etc. It should also be understood that an actual network arrangement may include any number of UEs being used by any number of users. Thus, the example of a single UE 110 is merely provided for illustrative purposes.

The UE 110 may be configured to communicate with one or more networks. In the example of the network configuration 100, the network with which the UE 110 may wirelessly communicate is a 5G NR radio access network (RAN) 120, an LTE RAN 122 and a wireless local area network (WLAN) 124. However, it should be understood that the UE 110 may also communicate with other types of networks (e.g., 5G cloud RAN, a next generate RAN (NG-RAN), a legacy cellular network, etc.) and the UE 110 may also communicate with networks over a wired connection. With regard to the exemplary embodiments, the UE 110 may establish a connection with the 5G NR RAN 120, the LTE RAN 122 and/or the WLAN 124. Therefore, the UE 110 may have a 5G NR chipset to communicate with the NR RAN 120, an LTE chipset to communicate with the LTE RAN 122 and an ISM chipset to communicate with the WLAN 124.

The 5G NR RAN 120 and the LTE RAN 122 may be portions of a cellular network that may be deployed by a network carrier (e.g., Verizon, AT&T, T-Mobile, etc.). The RANs 120, 122 may include cells or base stations that are configured to send and receive traffic from UEs that are equipped with the appropriate cellular chip set. In this example, the 5G NR RAN 120 includes the gNB 120A and the LTE RAN 122 includes the eNB 122A. However, reference to a gNB and an eNB is merely provided for illustrative purposes, any appropriate base station or cell may be deployed (e.g., Node Bs, eNodeBs, HeNBs, eNBs, gNBs, gNodeBs, macrocells, microcells, small cells, femtocells, etc.). The WLAN 124 may include any type of wireless local area network (WiFi, Hot Spot, IEEE 802.11x networks, etc.).

Those skilled in the art will understand that any association procedure may be performed for the UE 110 to connect to the 5G NR RAN 120. For example, as discussed above, the 5G NR RAN 120 may be associated with a particular network carrier where the UE 110 and/or the user thereof has a contract and credential information (e.g., stored on a SIM card). Upon detecting the presence of the 5G NR RAN 120, the UE 110 may transmit the corresponding credential information to associate with the 5G NR RAN 120. More specifically, the UE 110 may associate with a specific cell (e.g., the gNB 120A).

The network arrangement 100 also includes a cellular core network 130, the Internet 140, an IP Multimedia Subsystem (IMS) 150, and a network services backbone 160. The cellular core network 130 manages the traffic that flows between the cellular network and the Internet 140. The IMS 150 may be generally described as an architecture for delivering multimedia services to the UE 110 using the IP protocol. The IMS 150 may communicate with the cellular core network 130 and the Internet 140 to provide the multimedia services to the UE 110. The network services backbone 160 is in communication either directly or indirectly with the Internet 140 and the cellular core network 130. The network services backbone 160 may be generally described as a set of components (e.g., servers, network storage arrangements, etc.) that implement a suite of services that may be used to extend the functionalities of the UE 110 in communication with the various networks.

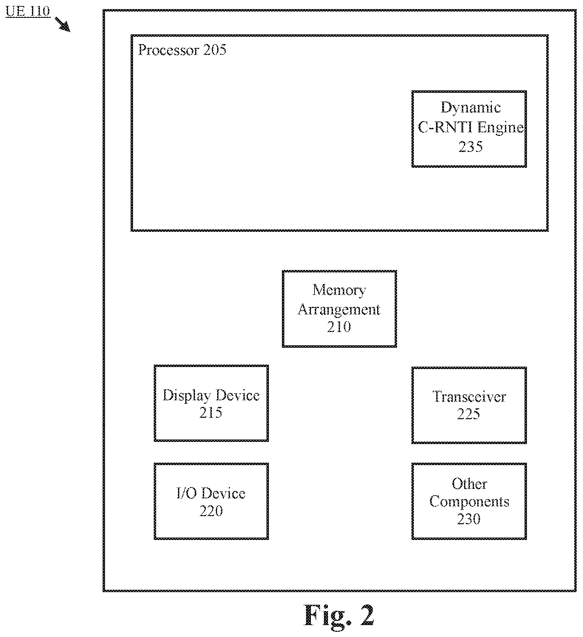

Fig. 2 shows an exemplary UE 110 according to various exemplary embodiments. The UE 110 will be described with regard to the network arrangement 100 of Fig. 1. The UE 110 may represent any electronic device and may include a processor 205, a memory arrangement 210, a display device 215, an input/output (I/O) device 220, a transceiver 225, and other components 230. The other components 230 may include, for example, an audio input device, an audio output device, a battery, a data acquisition device, ports to electrically connect the UE 110 to other electronic devices, sensors to detect conditions of the UE 110, etc.

The processor 205 may be configured to execute a plurality of engines for the UE 110. For example, the engines may include a dynamic C-RNTI engine 235. The dynamic C-RNTI engine 235 may perform various operations such as, but not limited to, receiving configuration information for the dynamic C-RNTI from the network and communicating with the network using the dynamic C-RNTI. Examples of these operations will be described in greater detail below.

The above referenced engine being an application (e.g., a program) executed by the processor 205 is only exemplary. The functionality associated with the engine may also be represented as a separate incorporated component of the UE 110 or may be a modular component coupled to the UE 110, e.g., an integrated circuit with or without firmware. For example, the integrated circuit may include input circuitry to receive signals and processing circuitry to process the signals and other information. The engines may also be embodied as one application or separate applications. In addition, in some UEs, the functionality described for the processor 205 is split among two or more processors such as a baseband processor and an applications processor. The exemplary embodiments may be implemented in any of these or other configurations of a UE.

The memory 210 may be a hardware component configured to store data related to operations performed by the UE 110. The display device 215 may be a hardware component configured to show data to a user while the I/O device 220 may be a hardware component that enables the user to enter inputs. The display device 215 and the I/O device 220 may be separate components or integrated together such as a touchscreen. The transceiver 225 may be a hardware component configured to establish a connection with the 5G NR RANs 120, 122 and other types of wireless networks. Accordingly, the transceiver 225 may operate on a variety of different frequencies or channels (e.g., set of consecutive frequencies).

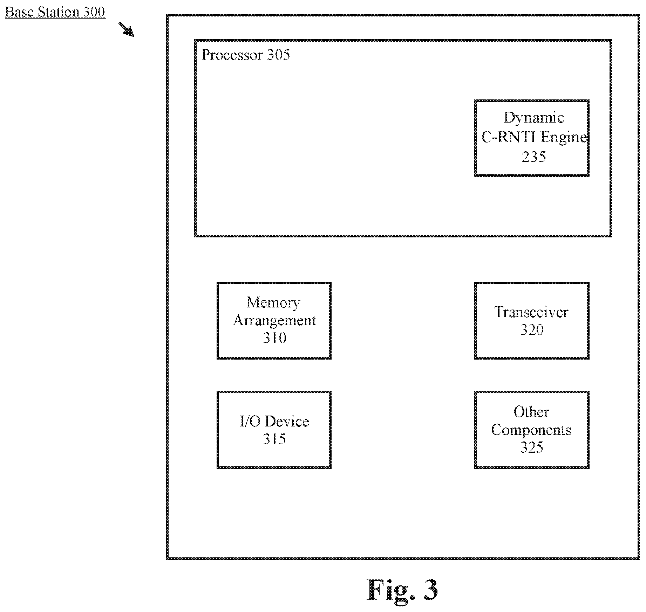

Fig. 3 shows an exemplary base station 300 according to various exemplary embodiments. The base station 300 may represent the gNB 120A or any other access node through which the UE 110 may establish a connection and manage network operations.

The base station 300 may include a processor 305, a memory arrangement 310, an input/output (I/O) device 315, a transceiver 320 and other components 325. The other components 325 may include, for example, an audio input device, an audio output device, a battery, a data acquisition device, ports to electrically connect the base station 300 to other electronic devices and/or power sources, etc.

The processor 305 may be configured to execute a plurality of engines of the base station 300. For example, the engines may include a dynamic C-RNTI engine 330. The dynamic C-RNTI engine 330 may be configured to perform operations such as, but not limited to, transmitting configuration information for the dynamic C-RNTI to the UE 110 and communicating with the UE 110 using the dynamic C-RNTI. Each of these operations will be described in more detail below.

The above noted engine 330 being an application (e.g., a program) executed by the processor 305 is only exemplary. The functionality associated with the engine 330 may also be represented as a separate incorporated component of the base station 300 or may be a modular component coupled to the base station 300, e.g., an integrated circuit with or without firmware. For example, the integrated circuit may include input circuitry to receive signals and processing circuitry to process the signals and other information. In addition, in some base stations, the functionality described for the processor 305 is split among a plurality of processors (e.g., a baseband processor, an applications processor, etc.). The exemplary embodiments may be implemented in any of these or other configurations of a base station.

The memory 310 may be a hardware component configured to store data related to operations performed by the base station 300. The I/O device 315 may be a hardware component or ports that enable a user to interact with the base station 300. The transceiver 320 may be a hardware component configured to exchange data with the UE 110 and any other UE in the network arrangement 100. The transceiver 320 may operate on a variety of different frequencies or channels (e.g., set of consecutive frequencies). Therefore, the transceiver 320 may include one or more components (e.g., radios) to enable the data exchange with the various networks and UEs.

As described above, the UE 110 is assigned a C-RNTI during a radio resource control (RRC) connection establishment procedure that is performed with the 5G NR-RAN 120 via the gNB 120A. This C-RNTI is used for communications between the 5G NR-RAN 120 and the UE 110. In addition, the portion of the RRC connection establishment procedure where the UE 110 is assigned the C-RNTI cannot be encrypted because the UE 110 would not have the information required to decrypt the RRC message including the C-RNTI. Thus, the C-RNTI is transmitted by the gNB 120A over the air without any encryption allowing an attacker to intercept the C-RNTI.

The exemplary embodiments are related to protecting the C-RNTI assigned to the UE 110 by dynamically changing the C-RNTI in the time-domain among a list of C-RNTIs assigned to the UE 110 based on a configuration received from the 5G NR-RAN 120 via secured signaling. Various examples of dynamically changing the C-RNTI in the time-domain and signaling the UE with the information to perform the dynamic changing are provided below.

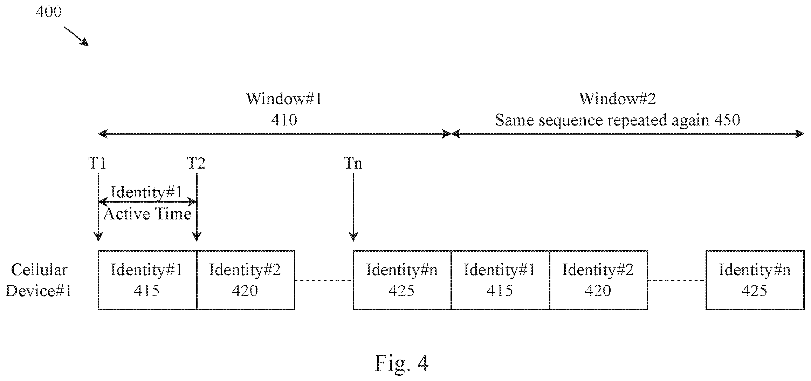

Fig. 4 shows a timing diagram 400 illustrating a C-RNTI of a UE dynamically changing over time according to various exemplary embodiments. That is, Fig. 4 is showing an example of the general principle that the dynamic C-RNTI for the UE 110 may change over time. It may be considered that the example of Fig. 4 shows two time windows 410 and 450. However, it should be understood that the changing of the dynamic C-RNTI illustrated by Fig. 4 may be extended for any period of time, e.g., for any number of time windows.

In time window 410, starting at time (T1), the UE 110 uses a first identity 415 (e.g., dynamic C-RNTI 1) when communicating with the network. This means the UE 110 and the gNB 120A understand that for time (T1) to time (T2), when a communication between the UE 110 and the gNB 120A uses a dynamic C-RNTI, the dynamic C-RNTI that should be used is C-RNTI 1. As will be described in more detail below, the UE 110 and the gNB 120A will understand this based on a configuration that is shared between the UE 110 and the gNB 120A.

At time (T2), the UE 110 will use the second identity 420 (e.g., dynamic C-RNTI 2) when communicating with the network. This will continue during the time window 410 until time (Tn) when UE 110 will use the n identity 425 (e.g., dynamic C-RNTI n) when communicating with the network. When time (Tn) is complete, the time window 410 is completed and the time window 450 begins. As can be seen in Fig. 4, during the time window 450, the UE 110 may repeat use of the dynamic C-RNTIs 415, 420, 425 as described above for the time window 410.

The duration of the time windows 410 and 450 and the duration of the individual time blocks (e.g., from T1 to T2) may be preconfigured based on values that are written into the cellular standards (e.g., 3GPP standards) or may be set based on the configuration between the UE 110 and the network when the dynamic C-RNTI is configured. For example, the duration of the time windows 410 may be based on the number of dynamic C-RNTIs assigned to the UEs. In another example, the duration of the individual time blocks may be based on a type of hopping scheme that is used, e.g., a system frame number (SFN), a sub-frame based scheme, a slot based scheme, etc. For example, if the hopping scheme is an SFN based scheme, the length of the individual time blocks may be an integer value of the SFNs. Examples of these hopping schemes will be provided in greater detail below.

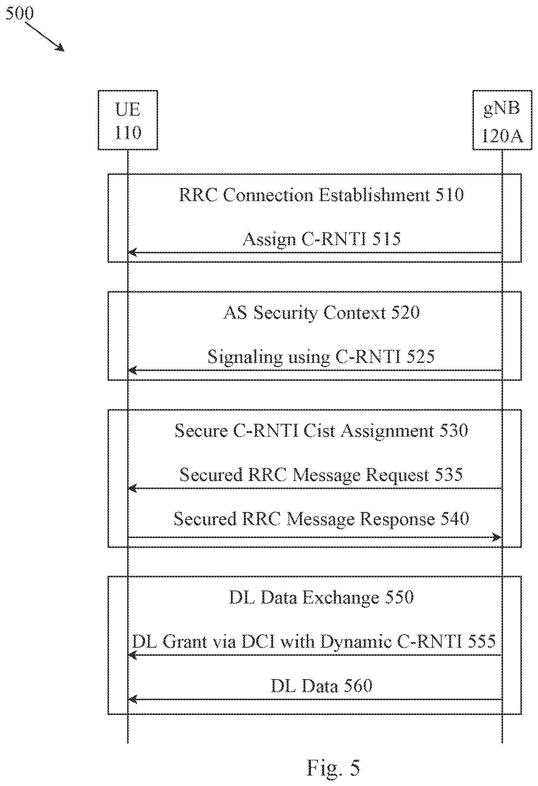

Fig. 5 shows a signaling diagram 500 showing an exemplary signaling to configure the UE 110 with a dynamic C-RNTI according to various exemplary embodiments. The signaling is shown between thew UE 110 and the gNB 120A.

The box 510 represents the signaling between the UE 110 and the gNB 120 for the RRC connection establishment procedure. Those skilled in the art will understand that there may be multiple messages exchanged between the devices during the RRC connection establishment procedure 510. However, to simplify the illustration it may be considered that one of the messages 515 may include the gNB 120A assigning the C-RNTI to the UE 110. As described above, this message during the RRC connection establishment procedure 510 will be an unsecured message.

The box 520 represents the signaling between the UE 110 and the gNB 120 to establish an access stratum (AS) security context. Again, those skilled in the art will understand that there may be multiple messages exchanged between the devices during the access stratum (AS) security procedure 520. However, to simplify the illustration this signaling is shown as including the signaling 525. As shown in Fig. 5, this signaling may use the C-RNTI assigned to the UE 110 during the RRC connection establishment procedure 510. At the completion of the AS security procedure 520, the UE 110 and the gNB 120A will have information allowing the devices to exchange secure encrypted messages.

In some exemplary embodiments, these secure messages may be used to configure the UE 110 with the dynamic C-RNTI. This signaling is shown as box 530 secure C-RNTI list assignment. This secured signaling may be in the form of secure RRC messages that are exchanged between the UE 110 and the gNB 120A. For example, the gNB 120A may send a secured RRC message request 535 to the UE 110. In one example, this message may be an RRC Reconfiguration Request. However, the exemplary embodiments are not limited to this type of message. The secured RRC message request 535 may include the configuration information for the dynamic C-RNTI that is to be implemented by the UE 110. Examples of the type of configuration information included in the secured RRC message request 535 are provided below. However, in general, it may be considered the information that allows the UE 110 and the gNB 120A to understand the dynamic C-RNTI that is going to be used at any particular time when the connection is active, e.g., the dynamic C-RNTI as shown in Fig. 4.

The UE 110 may indicate, via a secured RRC message response 540, that the UE 110 has been configured with the dynamic C-RNTI as included in the secured RRC message request 535. Thus, after completion of the secure C-RNTI list assignment 530, the UE 110 and the gNB 120A may exchange messages using the dynamic C-RNTI. This means the original C-RNTI assigned during the RRC connection establishment procedure 510 is no longer used for communication exchanges between the UE 110 and the gNB 120A. Thus, even if an attacker has the original C-RNTI, it cannot be used to monitor the message exchanges between the UE 110 and the gNB 120A because the message exchanges are using the dynamic C-RNTI rather than the originally assigned C-RNTI.

To provide a specific example, the signaling diagram 500 includes box 550 that shows a DL data exchange between the gNB 120A and UE 110 that uses the dynamic C-RNTI that was configured during the secure C-RNTI list assignment 530. The gNB 120A may have DL data for the UE 110. The gNB 120A may send a DL grant using Downlink Control Information (DCI) messages on the Physical Downlink Control Channel (PDCCH). The DCI messages include dynamic C-RNTI value assigned to the UE 110. Since the UE 110 has been configured with the dynamic C-RNTI, the UE 110 understands that the DL grant in the DCI is for the UE 110, and allows the UE 110 to receive the DL data 560 based on the information received in the DL grant. It should be understood that the DL data exchange 550 is only exemplary and any message exchanges between the UE 110 and the gNB 120A that use the C-RNTI may use the dynamic C-RNTI (e.g., an uplink (UL) data exchange, etc.).

It should also be understood that the secure C-RNTI list assignment 530 may be performed multiple times when the UE 110 is connected to the network. That is, the network may decide to change any of the parameters related to the dynamic C-RNTI with which the UE 110 is configured. For example, the change may be based on additional UEs connecting to the gNB 120A, a timer (e.g., the dynamic C-RNTI configuration is changed after redefined period of time), etc. Again, the network may use any type of the message for this reconfiguration, e.g., an RRC Reconfiguration Request.

As described above, there may be various manners of configuring the dynamic C-RNTI. The following will provide some examples of the configuration for the dynamic C-RNTI. However, prior to describing the examples of the configuration, a sample Abstract Syntax Notation One (ASN.1) data structure that may be included in the secured RRC message request 535 for the configuration of the dynamic C-RNTI is described. Again, as described above, in one example, the secured RRC message request 535 may be an RRC Reconfiguration Request but it is not limited to this type of message.

The example ASN.1 data structure may be as follows:

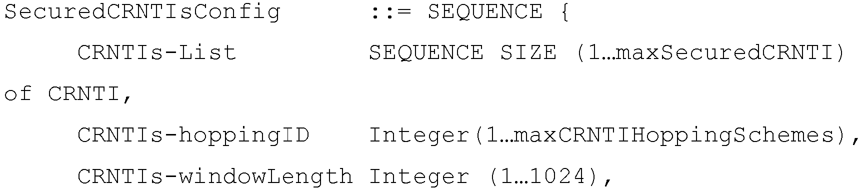

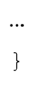

Each of the fields in the example data structure will be described with reference to the configuration of the dynamic C-RNTI as shown in Fig. 4. However, those skilled in the art will understand how the fields will be configured for the further examples of the dynamic C-RNTI described below. The first field, CRNTIs-List, indicates the dynamic CRNTIs assigned to the UE 110. For example, the C-RNTIs 415, 420, 425 of Fig. 4.

The next field, CRNTI-hoppingID, indicates the hopping sequence that will be applied by the UE 110. In the example of Fig. 4, the hopping scheme is just the linear hopping of identities 1 ...n. However as will be described below, the hopping scheme may be a system frame number (SFN) based scheme, a sub-frame based scheme, a slot based scheme, etc. That is the UE 110 may be able to perform any number of hopping schemes and the CRNTI-hoppingID may identify the specific hopping scheme to be used for this current connection (e.g., hopping scheme 1, hopping scheme 2, hopping scheme N). The different types of hopping schemes may be written into the cellular standards (e.g., 3GPP standards) and the UE 110 may be capable of performing one or more of these hopping schemes. In some exemplary embodiments, the UE 110 may signal the network in a UE capability message to indicate the dynamic C-RNTI hopping schemes that are supported by the UE 110. In other exemplary embodiments, the UE 110 may indicate that the UE 110 supports the use of dynamic C-RNTIs in general through a UE capability message.

The next field, windowLength, indicates the length of the window within which the same C-RNTI should be used. In the example of Fig. 4, this means the length of the time the C-RNTI 1 415 is used, e.g., the length of time from T1 to T2. In the below examples, various equations will be provided for the different hopping schemes. In these equations, the windowLength is the value of 'X' that is used in the equations.

In a first example of a dynamic C-RNTI hopping scheme, a SFN based scheme is described. Those skilled in the art understand that each frame within a network has an SFN. In LTE and 5G networks, the SFN cycles from 0 to 1023 and it is a number that is known to both the network and the UE. As described below, the value of the SFN may be used to implement the dynamic C-RNTI hopping scheme. For example, the SFN based scheme may be defined as follows: (1) use CRNTI#0 if {Floor(SFN/X) mod N} is equal to 0; (2) use CRNTI#1 if {Floor(SFN/X) mod N} is equal to 1; and (3) use CRNTI#N-1 if {Floor(SFN/X) mod N} is equal to (N-1). As described above with reference to the example ASN.1 data structure, 'X' is a number of consecutive SFNs a dynamic C-RNTI is to be used. The value 'N' is the number of assigned C-RNTIs, e.g., 1 ... N.

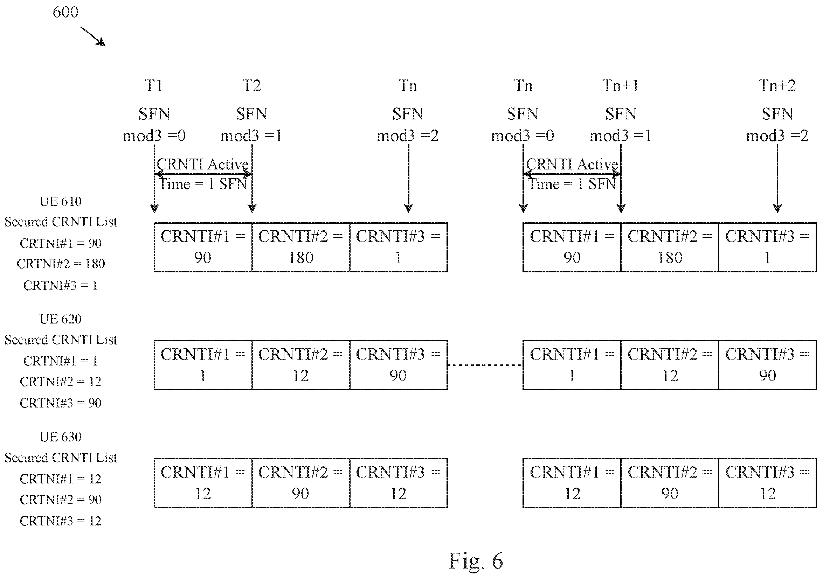

Fig. 6 shows a timing diagram 600 illustrating a dynamic C-RNTI hopping scheme based on a system frame number (SFN) of a network according to various exemplary embodiments. In the example of Fig. 6, it may be considered that there are three (3) UEs 610, 620 and 630 that are configured with the dynamic C-RNTI SFN hopping scheme. Also, in this example, it may be considered that the dynamic C-RNTI is used for one SFN, e.g., X = 1. Finally, as also shown in Fig. 6, it may be considered that each UE 610, 620, 630 is assigned three (3) C-RNTI values, e.g., N = 3. The UE 610 is assigned dynamic C-RNTI values of 90 (C-RNTI 0), 180 (C-RNTI 1) and 1 (C-RNTI 2), the UE 620 is assigned dynamic C-RNTI values of 1 (C-RNTI 0), 12 (C-RNTI 1) and 90 (C-RNTI 2)and the UE 630 is assigned dynamic C-RNTI values of 12 (C-RNTI 0), 90 (C-RNTI 1) and 12(C-RNTI 2). These examples show that dynamic C-RNTI values may be repeated for different UEs, e.g., C-RNTI 0 for UE 610 and C-RNTI 2 for UE 620 both have a value of 90. In addition, dynamic C-RNTI values may be repeated for the same UE, e.g., C-RNTI 0 and C-RNTI 2 for UE 630 both have a value of 12. However, it should be understood that this is only exemplary and there is no requirement that dynamic C-RNTI values be repeated for the same UE or for different UEs.

At time (T1), the UEs 610, 620, 630 and the gNB 120A that are configured with the dynamic C-RNTI SFN hopping scheme will perform the calculation, {Floor(SFN/X) mod N}. Because the value of the SFN (e.g., 0 - 1023) is common for all the devices (e.g., UEs 610, 620, 630 and the gNB 120A), each device will end up with the same result, e.g., SFN mod 3 = 0. Thus, according to the above defined rules for the dynamic C-RNTI SFN hopping scheme, the UEs 610, 620, 630 will use the dynamic C-RNTI value for C-RNTI 0, e.g., the UE 610 will use the value 90, the UE 620 will use the value 1 and the UE 630 will use the value 12. When the timing diagram advances to the next SFN, i.e., the SFN starting at time (T2), the devices will again make the calculation {Floor(SFN/X) mod N} based on the new SFN number. As shown in Fig. 6, this may continue as the SFN increments and as long as each of the UEs maintains their connection to the network.

It should be noted that in the above example, the exact value of the SFN was not provided. As described above, the specific value of the SFN is known to each of the devices (e.g., UEs 610, 620, 630 and the gNB 120A), and this value may be used to determine the value for the dynamic C-RNTI. In addition, the values of N may be based on any number of factors, including, but not limited to the number of UEs connected to the gNB 120A, planned capacity of UEs in RRC Connected Mode for the gNB 120A, etc. Thus, the gNB 120A (or the 5G NR-RAN 120) may perform various operations to select the values of X, N and/or the hopping scheme to implement based on any number of factors.

In a second example of a dynamic C-RNTI hopping scheme, a sub-frame based scheme is described. The sub-frame based scheme may be defined as follows: (1) use CRNTI#0 if {Floor((SFN*10 + Sub-frame)/X) mod N} is equal to 0; (2) use CRNTI#1 if {Floor((SFN*10 + Sub-frame)/X) mod N} is equal to 1; and (3) use CRNTI#N-1 if {Floor((SFN*10 + Sub-frame)/X) mod N} is equal to (N-1). In these equations X is the number of consecutive sub-frames a dynamic C-RNTI is to be used and N is the number of assigned dynamic C-RNTIs. A diagram is not provided for this example, but it should be understood that the timing diagram for this example would be similar to the timing diagram 600 of Fig. 6, except that each time block would be a sub-frame rather than a SFN.

In a third example of a dynamic C-RNTI hopping scheme, a slot based scheme is described. The slot based scheme may be defined as follows: (1) use CRNTI#0 if {Floor(((SFN*10 + Sub-frame)*SlotPerSubframe) + Slot) /X) mod N} is equal to 0; (2) use CRNTI#1 if {Floor(((SFN*10 + Sub-frame)*SlotPerSubframe) + Slot) /X) mod N} is equal to 1; and (3) use CRNTI#N-1 if {Floor(((SFN*10 + Sub-frame)*SlotPerSubfram) + Slot) /X) mod N} is equal to (N-1). In these equations, X is the number of consecutive slots a dynamic C-RNTI is to be used and N is the number of assigned dynamic C-RNTIs. A diagram is not provided for this example, but it should be understood that the timing diagram for this example would be similar to the timing diagram 600 of Fig. 6, except that each time block would be a slot rather than a SFN.

In some exemplary embodiments, one of the configured dynamic C-RNTIs (e.g., the C-RNTI having the index zero) could be considered a main C-RNTI that may be used to identify the UE 110 on the network side. For example, this main dynamic C-RNTI may identify the UE 110 in a procedure such as a connection reestablishment where the main dynamic C-RNTI may be used for retrieving the UE context.

The secured dynamic C-RNTI may be considered a critical configuration that could require synchronization between the UE and the network concerning applying the configurations, e.g., similar to operations such as changing the security keys that could be required to avoid resource block (RB) hyper frame number (HFN) re-use. Intra cell handover may be triggered to achieve this synchronization. During intra cell handover random access, the C-RNTI that would be used is the initial access C-RNTI that was assigned during the connection establishment or within the handover (HO) information elements (IEs), e.g.,MobilityControlInfo/ReconfigWithSync IEs. In other examples, the network may assign a different C-RNTI only for the purposes of this synchronization Random Access procedure. In further examples, the previously configured main C-RNTI (or any other previously assigned C-RNTI that is not part of the new assigned dynamic C-RNTI list) may be used for the synchronization Random Access procedure. Once the random access procedure is successful, the UE may start applying the new configuration and start using the assigned secured dynamic C-RNTIs.

Those skilled in the art will understand that the above-described exemplary embodiments may be implemented in any suitable software or hardware configuration or combination thereof. An exemplary hardware platform for implementing the exemplary embodiments may include, for example, an Intel x86 based platform with compatible operating system, a Windows OS, a Mac platform and MAC OS, a mobile device having an operating system such as iOS, Android, etc. In a further example, the exemplary embodiments of the above described method may be embodied as a program containing lines of code stored on a non-transitory computer readable storage medium that, when compiled, may be executed on a processor or microprocessor.

Although this application described various embodiments each having different features in various combinations, those skilled in the art will understand that any of the features of one embodiment may be combined with the features of the other embodiments in any manner not specifically disclaimed or which is not functionally or logically inconsistent with the operation of the device or the stated functions of the disclosed embodiments.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

It will be apparent to those skilled in the art that various modifications may be made in the present disclosure. Thus, it is intended that the present disclosure cover modifications and variations of this disclosure provided they come within the scope of the appended claims and their equivalent.

## Claims

1. A processor of a user equipment (UE) configured to perform operations comprising:
receiving, from a network with which the UE has a connection, a secured message comprising a configuration for a dynamic identifier, wherein the configuration comprises i) a plurality of identifiers that are each to be used by the UE during a different time period when the UE is connected to the network and ii) a hopping scheme that identifies when the plurality of identifiers are each to be used, wherein the hopping scheme is based on at least a system frame number (SFN) of the network, a sub-frame number or a slot number; and
exchanging communications with the network, wherein the communications comprise the dynamic identifier.

2. The processor of claim 1, wherein the plurality of identifiers comprise a plurality of Cell-Radio Network Temporary Identifiers (C-RNTIs).

3. The processor of claim 1, wherein the configuration further comprises a period of time during which each of the plurality of identifiers are to be used.

4. The processor of claim 1, wherein the secured message comprises a radio resource control (RRC) message.

5. The processor of claim 1, wherein the operations further comprise:
establishing the connection with the network, wherein the establishing comprises receiving an identifier from the network using an unsecured communication; and
establishing a security context with the network using the identifier, wherein the secured message is exchanged based on the security context,
wherein the UE does not use the identifier for communications with the network after the secured message is received.

6. The processor of claim 1, wherein the communications comprise unicast downlink (DL) communications from the network and unicast uplink (UL) communications to the network.

7. The processor of claim 1, wherein the operations further comprise:
receiving a further secured message comprising an updated configuration for the dynamic identifier; and
updating the UE with the updated configuration for the dynamic identifier.

8. The processor of claim 1, wherein the operations further comprise:
sending a capability message to the network comprising an indication the UE supports the dynamic identifier, wherein the indication comprises an identification of hopping schemes supported by the UE.

9. The processor of claim 1, wherein the operations further comprise:
performing a random access procedure with the network during an intra cell handover, the random access procedure comprising transmitting an unsecured message comprising an random access identifier; and
receiving, from the network in response to performing the random access procedure, a further plurality of identifiers that are each to be used by the UE during a different time period for subsequent communications with the network, wherein the random access identifier is not included in the further plurality of identifiers.

10. A base station configured to perform operations comprising:
sending, to a user equipment (UE) with which the base station has a connection, a secured message comprising a configuration for a dynamic identifier, wherein the configuration comprises i) a plurality of identifiers that are each to be used by the UE during a different time period when the UE is connected to the base station and ii) comprises a hopping scheme that identifies when the plurality of identifiers are each to be used, wherein the hopping scheme is based on at least a system frame number (SFN) of a network, a sub-frame number or a slot number; and
exchanging communications with the UE, wherein the communications comprise the dynamic identifier.

11. The base station of claim 10, wherein the plurality of identifiers comprise a plurality of Cell-Radio Network Temporary Identifiers (C-RNTIs).

12. The base station of claim 10, wherein the configuration further comprises a period of time during which each of the plurality of identifiers are to be used.

13. The base station of claim 10, wherein the secured message comprises a radio resource control (RRC) message.

## Patentansprüche

1. Prozessor eines Benutzergeräts (UE) der konfiguriert ist, um Operationen durchzuführen, umfassend:
Empfangen einer gesicherten Nachricht, die eine Konfiguration für eine dynamische Kennung umfasst, von einem Netzwerk, mit dem das UE eine Verbindung aufweist, wobei die Konfiguration i) eine Vielzahl von Kennungen, die von dem UE, wenn das UE mit dem Netzwerk verbunden ist, jeweils während verschiedener Zeiträume zu verwenden sind, und ii) ein Sprungschema, das ermittelt, wann die Vielzahl von Kennungen jeweils zu verwenden sind, umfasst, wobei das Sprungschema auf mindestens einer Systemrahmennummer (SFN) des Netzwerks, einer Teilrahmennummer oder einer Zeitschlitznummer basiert; und
Austauschen von Kommunikationen mit dem Netzwerk, wobei die Kommunikationen die dynamische Kennung umfassen.

2. Prozessor nach Anspruch 1, wobei die Vielzahl von Kennungen eine Vielzahl von Cell-Radio Network Temporary Identifiers (C-RNTIs) umfasst.

3. Prozessor nach Anspruch 1, wobei die Konfiguration ferner einen Zeitraum umfasst, während dessen jede der Vielzahl von Kennungen zu verwenden ist.

4. Prozessor nach Anspruch 1, wobei die gesicherte Nachricht eine Radio Resource Control-Nachricht (RRC-Nachricht) umfasst.

5. Prozessor nach Anspruch 1, wobei die Operationen ferner umfassen:
Herstellen der Verbindung mit dem Netzwerk, wobei das Herstellen das Empfangen einer Kennung vom Netzwerk unter Verwendung einer ungesicherten Kommunikation umfasst; und
Herstellen eines Sicherheitskontexts mit dem Netzwerk unter Verwendung der Kennung, wobei die gesicherte Nachricht basierend auf dem Sicherheitskontext ausgetauscht wird,
wobei das UE die Kennung nicht für Kommunikationen mit dem Netzwerk verwendet, nachdem die gesicherte Nachricht empfangen wurde.

6. Prozessor nach Anspruch 1, wobei die Kommunikationen Unicast-Downlink(DL)-Kommunikationen von dem Netzwerk und Unicast-Uplink(UL)-Kommunikationen an das Netzwerk umfassen.

7. Prozessor nach Anspruch 1, wobei die Operationen ferner umfassen:
Empfangen einer weiteren gesicherten Nachricht, umfassend eine aktualisierte Konfiguration für die dynamische Kennung; und
Aktualisieren des UE mit der aktualisierten Konfiguration für die dynamische Kennung.

8. Prozessor nach Anspruch 1, wobei die Operationen ferner umfassen:
Senden einer Fähigkeitsnachricht an das Netzwerk, umfassend eine Angabe, dass das UE die dynamische Kennung unterstützt, wobei die Angabe eine Identifikation von durch das UE unterstützten Sprungschemata umfasst.

9. Prozessor nach Anspruch 1, wobei die Operationen ferner umfassen:
Durchführen eines Direktzugriffsverfahrens mit dem Netzwerk während einer Übergabe innerhalb einer Funkzelle, wobei das Direktzugriffsverfahren das Übertragen einer ungesicherten Nachricht umfasst, die eine Direktzugriffskennung umfasst; und
Empfangen einer weiteren Vielzahl von Kennungen, die von dem UE jeweils während verschiedener Zeiträume für nachfolgende Kommunikationen mit dem Netzwerk zu verwenden sind, vom Netzwerk als Reaktion auf das Durchführen des Direktzugriffsverfahrens, wobei die Direktzugriffskennung nicht in der weiteren Vielzahl von Kennungen enthalten ist.

10. Basisstation, die konfiguriert ist, um Operationen auszuführen, umfassend:
Senden einer gesicherten Nachricht, die eine Konfiguration für eine dynamische Kennung umfasst, an ein Benutzergerät (UE), mit dem die Basisstation eine Verbindung aufweist, wobei die Konfiguration i) eine Vielzahl von Kennungen, die von dem UE, wenn das UE mit dem Netzwerk verbunden ist, jeweils während verschiedener Zeiträume zu verwenden sind, umfasst und ii) ein Sprungschema, das ermittelt, wann die Vielzahl von Kennungen jeweils zu verwenden ist, umfasst, wobei das Sprungschema auf mindestens einer Systemrahmennummer (SFN) eines Netzwerks, einer Teilrahmennummer oder einer Schlitznummer basiert; und
Austauschen von Kommunikationen mit dem UE, wobei die Kommunikationen die dynamische Kennung umfassen.

11. Basisstation nach Anspruch 10, wobei die Vielzahl von Kennungen eine Vielzahl von Cell-Radio Network Temporary Identifiers (C-RNTIs) umfasst.

12. Basisstation nach Anspruch 10, wobei die Konfiguration ferner einen Zeitraum umfasst, während dessen jede der Vielzahl von Kennungen zu verwenden ist.

13. Basisstation nach Anspruch 10, wobei die gesicherte Nachricht einen Radio Resource Control-Nachricht (RRC-Nachricht) umfasst.

## Revendications

1. Processeur d'un équipement utilisateur, UE, configuré pour réaliser des opérations comprenant :
la réception, en provenance d'un réseau avec lequel l'UE a une connexion, d'un message sécurisé comprenant une configuration pour un identifiant dynamique, dans lequel la configuration comprend i) une pluralité d'identifiants qui doivent chacun être utilisés par l'UE pendant une période de temps différente lorsque l'UE est connecté au réseau et ii) un schéma de sauts qui identifie lorsque la pluralité d'identifiants doivent chacun être utilisés, dans lequel le schéma de sauts est basé sur au moins un numéro de trame de système (SFN) du réseau, un numéro de sous-trame ou un numéro de créneau ; et
l'échange de communications avec le réseau, dans lequel les communications comprennent l'identifiant dynamique.

2. Processeur selon la revendication 1, dans lequel la pluralité d'identifiants comprend une pluralité d'identifiants temporaires de réseau radio cellulaire (C-RNTI).

3. Processeur selon la revendication 1, dans lequel la configuration comprend en outre une période de temps pendant laquelle chacun de la pluralité d'identifiants doit être utilisé.

4. Processeur selon la revendication 1, dans lequel le message sécurisé comprend un message de commande de ressources radio (RRC).

5. Processeur selon la revendication 1, dans lequel les opérations comprennent en outre :
l'établissement de la connexion avec le réseau, dans lequel l'établissement comprend la réception d'un identifiant provenant du réseau à l'aide d'une communication non sécurisée ; et
l'établissement d'un contexte de sécurité avec le réseau à l'aide de l'identifiant, dans lequel le message sécurisé est échangé sur la base du contexte de sécurité,
dans lequel l'UE n'utilise pas l'identifiant pour des communications avec le réseau après la réception du message sécurisé.

6. Processeur selon la revendication 1, dans lequel les communications comprennent des communications en liaison descendante (DL) en monodiffusion à partir du réseau et des communications en liaison montante (UL) en monodiffusion vers le réseau.

7. Processeur selon la revendication 1, dans lequel les opérations comprennent en outre :
la réception d'un message sécurisé supplémentaire comprenant une configuration mise à jour pour l'identifiant dynamique ; et
la mise à jour de l'UE avec la configuration mise à jour pour l'identifiant dynamique.

8. Processeur selon la revendication 1, dans lequel les opérations comprennent en outre :
l'envoi d'un message de capacité au réseau comprenant une indication que l'UE prend en charge l'identifiant dynamique, dans lequel l'indication comprend une identification de schémas de sauts pris en charge par l'UE.

9. Processeur selon la revendication 1, dans lequel les opérations comprennent en outre :
la réalisation d'une procédure d'accès aléatoire avec le réseau pendant un transfert intra-cellule, la procédure d'accès aléatoire comprenant la transmission d'un message non sécurisé comprenant un identifiant d'accès aléatoire ; et
la réception, en provenance du réseau en réponse à la réalisation de la procédure d'accès aléatoire, d'une pluralité supplémentaire d'identifiants qui doivent chacun être utilisés par l'UE pendant une période de temps différente pour des communications ultérieures avec le réseau, dans lequel l'identifiant d'accès aléatoire n'est pas inclus dans la pluralité supplémentaire d'identifiants.

10. Station de base configurée pour réaliser des opérations comprenant :
l'envoi, à un équipement utilisateur (UE) avec lequel la station de base est connectée, d'un message sécurisé comprenant une configuration pour un identifiant dynamique, dans laquelle la configuration comprend i) une pluralité d'identifiants qui doivent chacun être utilisés par l'UE pendant une période de temps différente lorsque l'UE est connecté à la base station et ii) comprend un schéma de sauts qui identifie lorsque la pluralité d'identifiants doivent être utilisés, dans laquelle le schéma de sauts est basé sur au moins un numéro de trame de système (SFN) d'un réseau, un numéro de sous-trame ou un numéro de créneau ; et
l'échange de communications avec l'UE, dans laquelle les communications comprennent l'identifiant dynamique.

11. Station de base selon la revendication 10, dans laquelle la pluralité d'identifiants comprend une pluralité d'identifiants temporaires de réseau radio cellulaire (C-RNTI).

12. Station de base selon la revendication 10, dans laquelle la configuration comprend en outre une période de temps pendant laquelle chacun de la pluralité d'identifiants doivent être utilisés.

13. Station de base selon la revendication 10, dans laquelle le message sécurisé comprend un message de commande de ressources radio (RRC).
